# EUROPÄISCHE PATENTSCHRIFT

(11) **EP 2 556 125 B1**
(45) Veröffentlichungstag und Bekanntmachung des Hinweises auf die Patenterteilung: **02.04.2014**
(21) Anmeldenummer: 12703526.9
(22) Anmeldetag: 09.02.2012
(51) Int. Cl.: C09D 133/06

(54) **FUSSBODENPANEEL MIT BEDRUCKTER KORKSCHICHT**
FLOOR PANEL HAVING A PRINTED CORK LAYER
PANNEAU DE PLANCHER DOTÉ D'UNE COUCHE DE LIÈGE IMPRIMÉE

(30) Priorität: 22.02.2011 DE 102011012015
(43) Veröffentlichungstag der Anmeldung: 13.02.2013
(73) Patentinhaber: Fritz Egger GmbH & Co. OG, 3105 Unterradlberg (AT)
(72) Erfinder: REHKER, Stephan, 37671 Höxter (DE); WOLF, Ansgar, 59602 Rüthen (DE)
(74) Vertreter: Cohausz & Florack
(86) Internationale Anmeldenummer: PCT/EP2012/052211
(87) Internationale Veröffentlichungsnummer: WO 2012/113652

(56) Entgegenhaltungen:
- EP-A1- 2 039 530

## Beschreibung

Die Erfindung betrifft ein Verfahren zur Herstellung eines Fußbodenpaneels mit einer Trägerplatte, einer Korkschicht, einer Grundierung und einer Dekorschicht. Ferner betrifft die Erfindung ein auf diese Weise hergestelltes Fußbodenpaneel.

Aus der Praxis sind Korkfußböden, die eine Trägerplatte aus einem Holzwerkstoff aufweisen, bekannt. Die Trägerplatten sind mit bekannten Verriegelungssystemen versehen, wodurch eine leimfreie Verbindung gleichartiger Fußbodenpaneele zu einem schwimmenden Fußbodenbelag möglich ist.

Korkfußböden haben die Eigenschaft, sich wegen der geringen Wärmeleitfähigkeit und der hohen Elastizität des Korks behaglich, insbesondere warm und weich, anzufühlen. Andererseits finden viele potentielle Kunden die Korkoberfläche unansehnlich. Daher wird die Korkschicht teilweise mit einer Grundierung versehen und diese mit einer Dekorschicht bedruckt, so dass die positiven Eigenschaften des Korks mit einem optisch bevorzugten Design, etwa in Form einer Holzoberfläche, kombiniert werden können.

Es hat sich jedoch in der Praxis gezeigt, dass die Dekorschicht entsprechend bedruckter Korkfußböden häufig keine zufriedenstellende Qualität aufweist. So treten immer wieder punktuell Mängel in der Dekorschicht auf. An diesen mängelbehafteten Stellen ist das Dekor unterbrochen oder weist nicht das gewünschte Aussehen auf.

Das der Erfindung zugrunde liegende technische Problem besteht daher darin, ein Verfahren zur Herstellung eines Fußbodenpaneels der eingangs genannten und zuvor näher beschriebenen Art sowie ein entsprechend hergestelltes Fußbodenpaneel anzugeben, die qualitativ verbesserte Dekorschichten ermöglichen.

Das zuvor genannte technische Problem ist bei einem Verfahren gemäß Anspruch 1 gelöst,
- bei dem die Korkschicht auf die Trägerplatte aufgebracht wird,
- bei dem zur Bildung der Grundierung ein fluides Lacksystem mit einem Anteil von flüchtigen Komponenten von maximal 10 Vol.-% auf die Korkschicht aufgebracht wird und
- bei dem die Dekorschicht auf die Grundierung aufgedruckt wird.

Ferner wird das zuvor genannte technische Problem bei einem Fußbodenpaneel gemäß Anspruch 15 dadurch gelöst, dass es nach dem zuvor beschriebenen Verfahren hergestellt worden ist.

Dabei wird unter einem Lacksystem das Material bzw. die Materialmischung verstanden, wie sie auf die Korkschicht aufgebracht wird. Beim Trocknen oder Aushärten des Lacksystems entweichen etwaig vorhandene, flüchtige Komponenten. Die zurückbleibende Grundierung wird dann als Lack oder Lackschicht bezeichnet. Zudem wird davon ausgegangen, dass die Grundierung zur Einsparung von weiteren Arbeitsschritten und zusätzlichem Material direkt auf die Korkschicht aufgebracht wird. Es ist jedoch denkbar, dass zwischen der Grundierung und der Korkschicht noch wenigstens eine weitere Schicht vorgesehen wird. Ebenso ist es denkbar, dass zwischen der Korkschicht und der Trägerplatte noch eine weitere Schicht vorgesehen ist. Diese kann eine Klebstoffschicht zum Aufkleben der Korkschicht und/oder eine andere Schicht sein.

Die Erfindung hat erkannt, dass Mängel der Dekorqualität vorwiegend dort entstehen, wo in der Korkoberfläche sogenannte Fehlstellen auftreten. An diesen Fehlstellen fehlen aufgrund vorhergehender Verarbeitungsschritte kleine Korkpartikel in der Oberfläche. Daher weist die Korkoberfläche an den Fehlstellen Vertiefungen auf. Konventionelle Lacksysteme für die Bildung von Grundierungen auf Korkoberflächen von Fußbodenpaneelen füllen diese Vertiefungen in der Korkoberfläche aus und bilden einen gleichmäßigen Oberflächenfilm.

Beim anschließenden Härten des Lacks, z.B. Trocknen des Lacksystems, entweichen die darin enthaltenen flüchtigen Komponenten. Dadurch verringert sich die Schichtdicke entsprechend. Im Bereich von Vertiefungen, wo das Lacksystem eine entsprechend höhere Schichtdicke aufweist, verringert sich die Schichtdicke beim Trocknen absolut gesehen stärker als in Bereichen ohne Fehlstellen. Daher bleiben nach dem Trocknen des Lacksystems in der Oberfläche der so entstehenden Grundierung Dellen zurück, und zwar in den Bereichen der Vertiefungen bzw. Fehlstellen in der Korkoberfläche. Diese Dellen können verhältnismäßig tief sein, da konventionelle Lacksysteme einen im Wesentlichen flüchtigen Lösemittelanteil in der Größenordnung von 40 Vol.-% bis 65 Vol.-% aufweisen.

Es wurde weiter festgestellt, dass oberhalb der Dellen oftmals keine oder nur eine unzureichende Dekorschicht auf die Grundierung aufgedruckt wird. Das Aufdrucken des Dekors erfolgt mittels einer Druckeinrichtung, welche über die Oberfläche geführt wird und in Form eines Druckzylinders ausgebildet sein kann. Im Bereich der Dellen kann die Druckeinrichtung den Kontakt mit der Grundierung verlieren, so dass dort keine oder nur eine unzureichende Dekorschicht aufgebracht wird. Dies hat nicht nur optische Nachteile, sondern vertieft die Dellen noch, wodurch das Aufbringen weiterer Oberflächenschichten weiter beeinträchtigt wird.

Des Weiteren hat sich gezeigt, dass die beim Aufbringen der Grundierung auftretenden Dellen auch durch ein nachträgliches Schleifen der Grundierung, die teilweise auch als Schleifgrund, Haftgrund oder Primerschicht bezeichnet wird, nicht oder nur unzureichend entfernt werden können. Durch das typischerweise zum Glätten der Grundierung durchgeführte Schleifen wird nicht genügend Material abgetragen, um eine Grundierung ohne Dellen in der Oberfläche zu erhalten.

Auch ein längeres Schleifen mit mehr Materialabtrag ist als solches nur bedingt geeignet, um eine dellenfreie Oberfläche der Grundierung zu erzeugen. Da die mittlere Schichtdicke der Grundierung sehr dünn ist, ist auch der tolerierbare Materialabtrag beim Schleifen begrenzt.

Im Ergebnis hat die Erfindung zu der überraschenden Erkenntnis geführt, dass das Auftreten von Dellen in der Dekorschicht durch die Verwendung von sogenannten High-Solid Lacksystemen zur Bildung der Grundierung vermieden oder wenigstens deutlich verringert werden kann. High-Solid Lacksysteme im Sinne der Erfindung weisen einen Anteil an flüchtigen Komponenten, insbesondere Lösemittelanteil, von maximal 10 Vol.-% auf. Dementsprechend zeichnen sich die High-Solid Lacke vorzugsweise durch eine maximale Volumenabnahme von 10 Vol.-% aus.

Dadurch wird ganz grundsätzlich erreicht, dass die relative Abnahme der Schichtdicke beim Aushärten und/oder Trocknen des Lacksystems verhältnismäßig gering ist, weshalb auch der absolute Unterschied in der Abnahme der Schichtdicke zwischen Bereich mit Vertiefungen in der Korkschicht und Bereichen ohne solche Vertiefungen während des Aushärtens und/oder Trocknens sehr gering ausfällt. Die in der Grundierung zurückbleibenden Dellen weisen daher, wenn überhaupt, nur eine sehr geringe Tiefe auf, die das Aufbringen weiterer Schichten auf die Grundierung nicht beeinträchtigt.

Nach dem klassischen Verständnis können Lösemittelanteile des Lacksystems als nicht verdunsteter Rest oder als beim Ausreagieren des Lacksystems in der Grundierung chemisch eingebunden im Lack verbleiben, selbst wenn das Lösemittel an sich flüchtig ist. Mit anderen Worten kann es sich bei den flüchtigen Komponenten des Lacksystems um dessen Lösemittelanteil handeln. Erforderlich ist dies jedoch nicht, da das Lösemittel noch weitere nicht flüchtige Komponenten aufweisen kann oder beim Aushärten des Lacksystems nicht ausgetrieben wird. Unter den flüchtigen Komponenten werden also diejenigen Komponenten verstanden, die beim Trocknen bzw. Aushärten des Lacksystems aus diesem ausgetrieben werden. Des Weiteren werden aufgrund der bevorzugten Prozessbedingungen bei der Herstellung von Fußbodenpaneelen unter flüchtigen Komponenten vorzugsweise solche verstanden, die bei Standardbedingungen (1 atm; 25°C), insbesondere aber bei 1 atm und 40°C bis 50°C, verdunsten.

Das Ausreagieren von Lösemittelkomponenten etwa durch Vernetzen kann wie das Entweichen flüchtiger Lösemittelkomponenten zu einer Volumenabnahme des Lacksystems beitragen. Je größer die Volumenabnahme durch das Ausreagieren bzw. die Vernetzung von Lösemittelkomponenten eines Lacksystems ausfällt, desto geringer sollte in der Regel der Anteil flüchtiger Komponenten im Lacksystem sein, damit die Volumenabnahme insgesamt einen hinsichtlich der Wellenbildung kritischen Wert nicht übersteigt.

Das Lacksystem kommt bedarfsweise auch völlig ohne eine flüchtige Komponente aus, solange es sich bei dem Lacksystem dennoch um ein fluides Lacksystem handelt. Unter einem fluiden Lacksystem wird ganz allgemein ein fließfähiges Lacksystem verstanden. Die Viskosität des Lacksystems ist mithin groß genug, um dem Lacksystem einen fluiden, jedenfalls pastösen, Charakter zu verleihen. Durch ein solches, fluides Lacksystem wird erreicht, dass das Lacksystem in die Vertiefungen der Korkoberfläche eindringen kann, um die Vertiefungen entsprechend aufzufüllen. Pulverlacksysteme, die ausschließlich aus Feststoffen bestehen, sind nicht als fluide Lacksysteme anzusehen. Pulverlacksysteme sind auch nicht geeignet, die Vertiefungen in der Korkschicht aufzufüllen und mithin eine ebene, dellenfreie Oberfläche der Grundierung sicherzustellen. Ein fluides Lacksystem in Sinne der Erfindung weist also letztlich wenigstens eine flüssige Komponente auf. Bei dieser flüssigen Komponente handelt es sich vorzugsweise um eine Lösemittelkomponente. Sie kann beispielsweise chemisch reagieren oder beim Härten ausgetrieben werden.

Bei einer ersten bevorzugten Ausgestaltung des Verfahrens wird zur Bildung der Grundierung ein Lacksystem mit einem Anteil flüchtiger Komponenten von maximal 5 Vol.-% aufgebracht. Dadurch wird die Neigung zur Bildung von Dellen in der Oberfläche der Grundierung weiter verringert. Gleichzeitig kann aber noch eine in vielen Fällen ausreichend gleichmäßige Lackschicht aufgetragen werden. Weiter bevorzugt ist es in diesem Zusammenhang, wenn das Lacksystem einen Anteil flüchtiger Komponenten von maximal 3 Vol.-% aufweist. Bei geeigneter Verfahrensführung kann so einerseits ein gleichmäßiger Lackauftrag erreicht und andererseits das Entstehen von Dellen mehr oder weniger vollständig verhindert werden. Alternativ oder zusätzlich kann das Lacksystem zur Bildung der Grundierung einen Anteil flüchtiger Komponenten von maximal 10 Gew.-%, vorzugsweise maximal 5 Gew.-%, insbesondere maximal 3 Gew.-%, aufweisen. Dies gilt beispielsweise dann, wenn aufgrund höherer Dichteunterschiede der Komponenten des Lacksystems neben dem Volumen des Anteils flüchtiger Komponenten auch dessen Gewichtsanteil entsprechend eingestellt sein sollte, um einen gleichmäßigen Auftrag des Lacksystems sicherzustellen.

Zur Bildung der Grundierung kann aufgrund des geringen Anteils flüchtiger Komponenten ein strahlenhärtendes Lacksystem verwendet werden. Bei diesen Lacksystemen vernetzt beim Aushärten unter Einwirkung von Strahlung wenigstens eine Lösemittelkomponente mit einer anderen Komponente des Lacksystems. Diese Lösemittelkomponente muss also nicht oder in deutlich geringerem Maße durch Trocknen ausgetrieben werden. Diese Lacksysteme können aufgrund eines höheren Anteils flüssiger Komponenten, eine hinreichend niedrige Viskosität für das gleichmäßige Aufbringen des Lacksystems bereitstellen. Dabei bietet sich aufgrund der vereinfachten Handhabung und Verfahrensführung die Verwendung eines UVhärtenden Lacksystems an. Das Aushärten des Lacksystems erfolgt dabei bevorzugt direkt nach dem Aufbringen des Lacksystems, da nachträglich aufgebrachte Schichten das Eindringen der Strahlung in das Lacksystem zu dessen gleichmäßiger Härtung beeinträchtigen kann.

Unabhängig von der Härtung des Lacksystems kann zur Bildung der Grundierung bevorzugt ein Acrylharz-Lacksystem verwendet werden. Entsprechende Lacksysteme lassen sich gut verarbeiten und bilden eine Grundierung mit bevorzugten physikalischen Eigenschaften. Dies gilt insbesondere dann, wenn das Lacksystem wenigsten ein Polyacrylat und/oder wenigstens ein Polymethacrylat aufweist.

Damit das Trocknen und/oder das Aushärten des Lacksystems zur Bildung der Grundierung beschleunigt werden können, kann die Korkschicht vor dem Aufbringen des Lacksystems auf eine Temperatur zwischen 40°C und 60°C erwärmt werden. Grundsätzlich sind dabei höhere Temperaturen bevorzugt, allerdings kann eine zu hohe Temperatur Korkzellen in der Korkschicht zum Expandieren bringen, was wegen der Bildung weiterer Unebenheiten zu vermeiden ist. Daher hat es sich als besonders zweckmäßig erwiesen, die Korkschicht auf etwa 50°C zu erwärmen.

Das Lacksystem zur Bildung der Grundierung wird vorzugsweise mit einer Walzenauftragsmaschine auf die Korkschicht aufgebracht. Diese weist bevorzugt eine Auftragswalze auf, die eine bestimmte Menge des Lacksystems auf die Korkschicht aufträgt. Die Auftragswalze dreht sich dabei in Transportrichtung des noch unfertigen Fußbodenpaneels. Die Auftragswalze kann mit einer Dosierwalze zusammenwirken und einen Spalt bilden, über dem das Lacksystem ansteht und entsprechend des Walzenspalts von der Auftragswalze mitgenommen wird. In Transportrichtung nach der Auftragswalze kann eine entgegen der Transportrichtung drehende Glättwalze vorgesehen sein, die mit der Korkschicht einen definierten Spalt bildet, der die Schichtdicke des Lacksystems festlegt. Die Glättwalze kann verchromt sein oder eine äußere Schicht aus Hartmetall oder Keramik aufweisen, damit sich eine möglichst ebene Oberfläche des Lacksystemfilms ausbilden kann. Durch die Drehrichtung der Glättwalze und/oder das Aufbringen des Lacksystems über die Auftragswalze wird das Lacksystem gleichmäßig in die Vertiefungen in der Korkoberfläche hineingebracht. Der Auftrag des Lacksystems kann auch auf eine andere Art erfolgen. Es sollte jedoch ein in einer Breite einstellbarer Spalt vorgesehen sein, um eine Grundierung mit definierter und gleichmäßiger Schichtdicke erzeugen zu können.

Der Transport des noch unfertigen Fußbodenpaneels durch die Walzenauftragsmaschine kann durch wenigstens ein Förderband bewerkstelligt werden, wobei unterhalb der Auftragswalze und/oder der Glättwalze eine Gegendruckwalze vorgesehen sein kann, die mit der anderen Walze einen Walzenspalt definierter Breite bildet. Die wenigstens eine Gegendruckwalze kann gummiert und/oder angetrieben sein. Bedarfsweise stellt die wenigstens eine Gegendruckwalze auch die Antriebswalze für das Förderband dar.

Um die Grundierung nach dem Aufbringen auf die Korkschicht zu glätten und/oder die Haftung einer weiteren Schicht auf der Grundierung zu verbessern, kann die Grundierung nach dem Aufbringen geschliffen werden. Bedarfsweise kann dies auch in mehreren Schritten mit unterschiedlichen Körnungen geschehen.

Das Aufbringen eines Dekors kann dadurch vereinfacht werden, dass auf die Grundierung zunächst eine Grundfarbe aufgetragen wird. Die Grundfarbe wird vorzugsweise mittels einer geeigneten Auftragswalze auf die Grundierung aufgewalzt. Es kann dabei auch für den Auftrag der Grundfarbe, eine Druckeinrichtung verwendet werden, wobei die Grundfarbe jedoch anders als beim Drucken einer Dekorschicht, vollflächig anstatt in Form eines Musters aufgetragen wird. Durch den Auftrag der Grundfarbe wird das Dekor nicht durch die Farbe der Grundierung beeinträchtigt. Die Grundfarbe kann auch einer Grundfarbe des Dekors entsprechen und so einen Teil des später sichtbaren Dekors bilden. Die Schicht der Grundfarbe kann also als eine Teilschicht der Dekorschicht angesehen werden. Es kann aber auch ein Lacksystem zur Bildung der Grundierung verwendet werden, welches entsprechende Farbpigmente aufweist, so dass die Grundierung bereits die gewünschte Grundfarbe aufweist. Die Grundfarbe wird vorzugsweise mittels einer Walze, insbesondere mittels eines Druckwerks, aufgetragen.

Auf die Grundfarbe oder alternativ auf die Grundierung wird eine Dekorschicht aufgedruckt, was bevorzugt mittels Druckwalzen erfolgt. Dabei bietet sich insbesondere das Tiefdruckverfahren an. Um ein möglichst ansprechendes Dekor zu erzielen, wird vorzugsweise ein Mehrfarben-Druckwerk zum Auftragen der Dekorschicht in mehreren Arbeitsgängen verwendet. In jedem Arbeitsgang wird eine andere Farbe des Dekors aufgebracht. Das Dekor könnte aber auch auf andere Weise, wie etwa dem Digitaldruck, aufgebracht werden.

Damit die Dekorschicht zum Schutz gegen Abrieb dauerhaft mit einer Versiegelung versehen werden kann, bietet es sich an, einen Haftvermittler auf die Dekorschicht aufzutragen. Die Versiegelungsschicht kann aber grundsätzlich auch ohne Haftvermittler auf die Dekorschicht aufgetragen werden, etwa um eine Materialeinsparung zu erzielen. Je nach der gewünschten Versiegelung der Dekorschicht und der späteren Beanspruchung des Fußbodenpaneels kann die Versiegelung mehrschichtig ausgebildet sein und in mehreren Arbeitsgängen aufgebracht werden.

Als Korkschicht kann eine solche mit einer Dichte von wenigstens 550 kg/m³ verwendet werden. Dabei führt eine höhere Verdichtung des Korks zu weniger und/oder weniger ausgeprägten oberflächlichen Vertiefungen in der Korkschicht (Fehlstellen). Weiter bevorzugt kann es daher sein, wenn die Dichte der Korkschicht wenigstens 650 kg/m³ beträgt. Mit dem Anstieg der Dichte kann aber auch die Elastizität der Korkschicht beeinträchtigt werden, was bei der Wahl des Korkmaterials zu berücksichtigen ist.

Alternativ oder zusätzlich können Vertiefungen in der Korkschicht durch die Schichtdicke selbst begrenzt werden. Es kann dazu etwa eine Korkschicht mit einer Schichtdicke von weniger als 2 mm verwendet werden. Wenn dies die Elastizität oder die Isolierungswirkung des Korks beeinträchtigt, kann die Korkschicht auch ein Dicke von weniger als 1,5 mm aufweisen.

Um Spannungen im Fußbodenpaneel auszugleichen, empfiehlt es sich, eine sogenannte Gegenzugschicht auf der Rückseite der Trägerplatte vorzusehen. Bevorzugt wird diese ebenfalls aus einer Korkschicht gebildet. Ein besonders guter Spannungsausgleich wird dabei erhalten, wenn die Korkschichten zu beiden Seiten der Trägerplatte aus dem gleichen Material bestehen und/oder die gleiche Schichtstärke aufweisen. Bedarfsweise kann eine Gegenzugschicht in Form einer Korkschicht vorgesehen sein, die der mit der Grundierung zu versehenden Korkschicht gleicht. Es können jedoch auch eine andere Korkschicht oder ein anderes Material als Gegenzugschicht verwendet werden, wenn dadurch beispielsweise Materialkosten eingespart werden.

Das eingangs genannte technische Problem wird zudem durch ein Fußbodenpaneel mit einer Trägerplatte, einer Korkschicht, einer Grundierung und einer Dekorschicht gelöst, das nach einem der Ansprüche 1 bis 14 hergestellt worden ist.

Des Weiteren kann die Trägerplatte an den umlaufenden Schmalseiten mit an sich bekannten Verriegelungssystemen versehen sein. Jeweils gegenüberliegende Schmalseiten weisen dabei bevorzugt miteinander korrespondierende Verriegelungssysteme auf, um jeweils gleichartige Fußbodenpaneele zu einem Fußbodenbelag zusammensetzen und verriegeln zu können.

Vorzugsweise ist die Trägerplatte aus Holz oder einem Holzwerkstoff gebildet. Entsprechende Trägerplatten sind kostengünstig herzustellen und weisen günstige mechanische Eigenschaften auf. Außerdem können entsprechende Trägerplatten leicht recycelt werden. Zur Anbringung von Verriegelungssystemen zur leimfreien Verbindung der Paneele an den Schmalseiten bietet sich die Verwendung einer mitteldichten Faserplatte (MDF) oder einer hochdichten Faserplatte (HDF) an. Kostengünstigere Fußbodenpaneele können mit als Spanplatten ausgebildeten Trägerplatten gefertigt werden. Grundsätzlich kommen aber auch Trägerplatten in Form von Oriented-Stand-Boards-Platten (OSB) und, insbesondere wegen ihrer Resistenz gegenüber Feuchtigkeit, als WPC-Platte (Wood-Plastic-Compound) oder Kompaktlaminat ausgebildete Trägerplatten in Frage.

Gute Kompromisse zwischen der mechanischen Festigkeit und der Dicke der Fußbodenpaneele ergeben sich für Trägerplatten mit einer Dicke zwischen 2 mm und 8 mm. Als besonders zweckmäßig haben sich in diesem Zusammenhang Trägerplatten mit einer Dicke zwischen 3,5 mm und 6 mm herausgestellt.

Nachfolgend wird die Erfindung anhand einer lediglich Ausführungsbeispiele darstellenden Zeichnung näher erläutert. In der Zeichnung zeigt
- Fig. 1: den Schichtaufbau eines erfindungsgemäßen Fußbodenpaneels in schematischer Darstellung,
- Fig. 2: den Ablauf eines erfindungsgemäßen Verfahrens in einer Fließbilddarstellung und
- Fig. 3: eine bei dem Verfahren gemäß Fig. 2 verwendete Walzenauftragsmaschine.

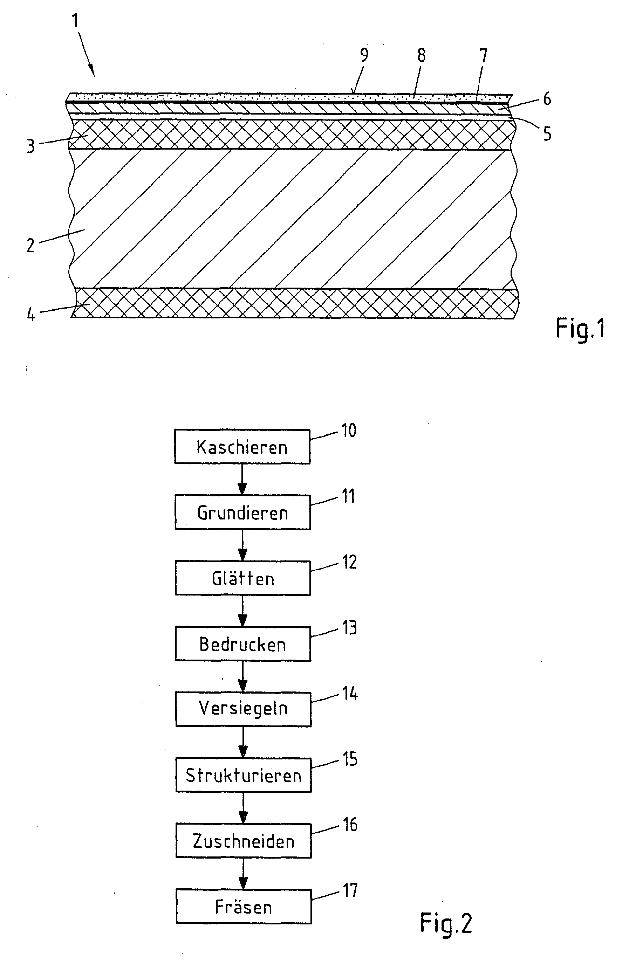

In Fig. 1 ist ein Fußbodenpaneel 1 in einem vertikalen Schnitt dargestellt, wobei die Darstellung insoweit schematisch ist, als dass an den Schmalseiten auf die Darstellung von Verriegelungselementen zum Verriegeln des Fußbodenpaneels mit gleichartigen Fußbodenpaneelen zu einem Fußbodenbelag verzichtet worden ist. Darüber hinaus sind die einzelnen Schichten des Fußbodenpaneels nicht maßstäblich wiedergegeben. Vielmehr sind insbesondere die oberen Schichten der besserer Erkennbarkeit halber vergrößert dargestellt. Nicht dargestellt ist zudem, dass das Fußbodenpaneel eine rechteckige Form aufweist.

Das Fußbodenpaneel 1 weist eine Trägerplatte 2 in Form einer hochdichten Faserplatte (HDF) auf, auf der eine Korkschicht 3 mittels eines Reaktionsklebers aufgeklebt ist. Auf der Unterseite der Trägerplatte 2 ist ebenfalls mittels eines Reaktionsklebers eine weitere Korkschicht 4 aufgeklebt, die als sogenannte Gegenzugschicht für das Fußbodenpaneel 1 fungiert. Die Korkschichten 3,4 weisen eine Dichte zwischen 550 kg/m³ bis 600 kg/m³ auf. Die Dicke der oberen Korkschicht 3 beträgt zwischen 1 mm und 2 mm. Die Korkschicht 4 der Gegenzugschicht ist dagegen etwa 1 mm dick. Die Stärke der zwischen den Korkschichten 3,4 angeordneten Trägerplatte 2 beträgt etwa 3,5 mm bis 4,5 mm.

Auf der Oberseite der oberen Korkschicht 3 ist eine Grundierung 5 aufgebracht, welche Vertiefungen in der Korkoberfläche ausfüllt und selbst eine glatte und ebene Oberfläche zum Bedrucken mit einer Dekorschicht 6 bildet. Bei dem dargestellten und insoweit bevorzugten Fußbodenpaneel ist auf der Grundierung 5 eine Farbschicht 6 in Form einer auf das Dekor abgestimmten Grundfarbe aufgetragen, die eine untere Teilschicht der Dekorschicht 6 bildet. Die Grundfarbe ist vollflächig ohne Farbschattierungen vorgesehen. Die farbliche Abstimmung von Grundfarbe und Dekor ist derart, dass die Grundfarbe einen Farbton des Dekors bildet und somit selbst Bestandteil des sichtbaren Dekors wird.

Auf der Grundfarbschicht werden nacheinander verschiedene Muster in unterschiedlichen Farben aufgedruckt. Die Schichten bilden dann gemeinsam die Dekorschicht 6. Die jeweiligen Muster werden im Tiefdruckverfahren mittels entsprechender Druckwalzen aufgebracht. Das Dekor ist bei dem dargestellten und insoweit bevorzugten Fußbodenpaneel 1 einer Holzoberfläche nachempfunden. Das Dekor könnte aber auch anderen Oberflächen nachempfunden oder als Fantasiedekor ausgebildet sein.

Auf der Dekorschicht 6 ist eine Haftvermittlerschicht 7 vorgesehen, auf der die darauf angeordnete Versiegelungsschicht 8 gut haftet, welche das Dekor vor Abrieb schützen soll. Die Versiegelungsschicht 8 ist beim dargestellten Fußbodenpaneel 1 in mehreren Teilschichten aufgebracht, von denen wenigstens eine Teilschicht abriebfeste Partikel, wie beispielsweise Korundpartikeln, aufweist.

Ferner weist die Versiegelungsschicht 8 eine Strukturierung 9 auf, die der Oberfläche des Fußbodenpaneels 1 eine dreidimensionale Erscheinung verleiht. Die Strukturierung 9 kann beispielsweise durch eine Prägung (mechanische Pore), durch variable Benetzung (chemische Pore) oder einen Druckvorgang (Druck- oder Lackpore) erreicht werden.

In Fig. 2 sind die wesentlichen Verfahrensschritte bei der Herstellung des in Fig. 1 dargestellten Fußbodenpaneels 1 schematisch wiedergegeben. Zunächst werden Trägerplatten bereitgestellt, aus denen später mehrere Fußbodenpaneele herausgearbeitet werden. Die Trägerplatten werden anschließend von beiden Seiten mittels eines Reaktionsklebers in einer Doppelbandpresse mit Korkschichten kaschiert 10.

Danach wird auf die obere Korkschicht ein Lacksystem zur Bildung einer Grundierung aufgetragen 11. Das verwendete Lacksystem weist einen Anteil flüchtiger Komponenten von weniger als 3 Vol.-% auf. Bedarfsweise wird vor dem Aufbringen des Lacksystems der Schichtverbund aus Trägerplatte und Korkschichten oberflächlich oder insgesamt auf eine Temperatur von ungefähr 50°C erwärmt. Durch das Anheben der Temperatur lässt sich die Zeit zum Härten des Lacksystems verkürzen. Um flüchtige Komponenten des Lacksystems auszutreiben, wird das Lacksystem in einem Trocknungskanal getrocknet. Vorzugsweise parallel dazu wird das Lacksystem einer UV-Strahlung ausgesetzt, um Photoinitiatoren anzuregen und eine chemische Aushärtung (Vernetzung) des Lacksystems zu bewirken. Da die Grundierung noch mit UV-Strahlen absorbierenden Farbschichten bedruckt wird, wird die Grundierung bereits in diesem Verfahrensstadium vollständig ausgehärtet.

Die Korkschicht auf der späteren Unterseite der Trägerplatte dient als sogenannte Gegenzugschicht. Diese wird nicht bedruckt und braucht daher auch nicht grundiert zu werden.

Die ausgehärtete Grundierung wird in einem nachfolgenden Schritt 12 geschliffen, um die Oberfläche weiter zu glätten und die Haftung weiterer Schichten auf der Grundierung zu verbessern. Beim dargestellten und insoweit bevorzugten Verfahren wird die Grundierung mittels einer Breitbandschleifmaschine zweistufig mit Körnungen von 320 und anschließend von 400 geschliffen.

Auf die derart vorbereitete Oberfläche der Grundierung wird eine Dekorschicht aufgebracht 13. Dabei wird zunächst eine wasserbasierte Grundfarbe aufgetragen. Die Menge an Grundfarbe beträgt bei dem beschriebenen Verfahren etwa 60 g/m² (nass), wobei der Festkörperanteil der Grundfarbe etwa 50 bis 65 Gew.-% beträgt. Der Farbton ist an den Farbton des Dekors angepasst. Die Grundfarbe kann bedarfsweise in mehreren Schritten nass in nass oder mit Zwischentrocknung aufgetragen werden. Der Auftrag der Grundfarbe erfolgt mit einer Auftragswalze, auf welche die Grundfarbe mit einer definierten Schichtdicke aufgebracht wird. Die Auftragswalze überträgt die Grundfarbe dann auf die unter der Auftragswalze entlang geführte, auf der Korkschicht aufgebrachte Grundierung. Die definierte Schichtdicke kann mittels einer Dosierwalze eingestellt werden, welche mit der Auftragswalze einen Spalt vorgegebener Breite ausbildet, wobei oberhalb des Spalts und zwischen den Walzen Grundfarbe in ausreichender Menge bereitgehalten wird.

Zwischen dem Auftragen der Grundfarbe und den weiteren Dekorschichten wird die Grundfarbe in einem Trockenkanal mittels Warmluft getrocknet. Anschließend werden verschiedene Dekorelemente in verschiedenen Farbtönungen nacheinander im an sich bekannten Tiefdruckverfahren aufgedruckt. Alternativ oder zusätzlich können auch digitale Drucktechniken zum Aufdrucken des Dekors verwendet werden. Die einzelnen Dekorteilschichten werden einzeln oder nach dem Auftrag gemeinsam zum Zwecke der Aushärtung mittels Warmluft getrocknet.

In einem nächsten Schritt wird ein Haftvermittler auf die Dekorschicht aufgetragen und mittels UV-Strahler getrocknet. Der Haftvermittler sorgt für eine dauerhafte Haftung einer noch aufzubringenden Versiegelungsschicht trotz der Elastizität der Korkschicht.

Die Versiegelungsschicht wird vorzugsweise in mehreren Schritten aufgebracht 14. Beim vorliegend beschriebenen Verfahren weist jede Teilschicht Hartpartikel einer unterschiedlichen Partikelgröße auf. Die Partikelgröße nimmt zur Oberseite hin ab. In unteren Schichten betragen die Partikelgrößen beispielsweise 60 bis 200 µm, während die oberflächennahen Partikel eine Größe von beispielsweise 5 bis 20 µm aufweisen. Es erfolgt jeweils eine Zwischenhärtung, wodurch die einzelnen Schichten der Versiegelungsschicht zunächst aber nur leicht verfestigt werden, was auch als Angelieren bezeichnet wird.

Beim beschriebenen Verfahren wird aus optischen Gründen noch eine weitere Lackschicht aus einem transparenten Lacksystem aufgetragen. Der Auftrag erfolgt jedoch nicht vollflächig, so dass eine Strukturierung 15 der Oberfläche erhalten wird. Diese Strukturierung wird optisch durch Glanzgradunterschiede zwischen der oberflächlichen Lackschicht und der Versiegelungsschicht verstärkt. Man spricht in diesem Zusammenhang auch von einer Lackpore. Abschließend werden die oberflächliche Lackschicht und die Versiegelungsschicht gemeinsam mittels UV-Strahlen ausgehärtet.

Danach erfolgt ein Zuschneiden 16, bei dem aus den wie beschrieben bearbeiteten, großen Verbundplatten einzelne Fußbodenpaneele herausgearbeitet werden. Diese werden dann an ihren Schmalseiten durch Fräsen 17 mit Verriegelungsprofilen versehen.

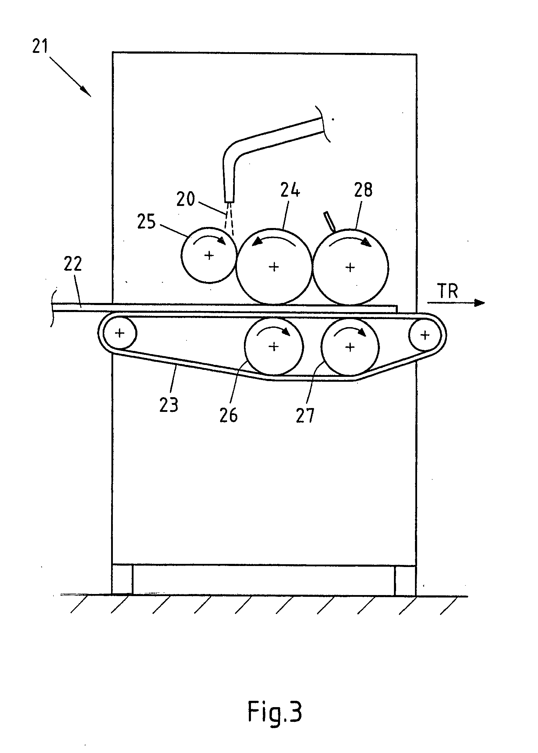

Wie dies in der Fig. 3 dargestellt ist, wird das Lacksystem 20 mit einer Walzenauftragsmaschine 21 auf die Korkschicht aufgebracht. Die Trägerplatten 22 mit den beiden Korkschichten werden von einem Förderbandsystem 23 in Transportrichtung TR durch die Walzenauftragsmaschine 21 hindurch transportiert. Das Lacksystem 20 wird oberhalb eines Spalts zwischen einer Auftragswalze 24 und einer Dosierwalze 25 aufgegeben. Von dort wird je nach Walzenspalt zwischen Auftragswalze 24 und Dosierwalze 25 eine entsprechende Menge des Lacksystems 20 von der Auftragswalze 24 abtransportiert und anschließend auf die Korkschicht übertragen. Die Drehrichtung der Dosierwalze 25 kann gegenläufig zum oder gleichsinnig mit der Auftragswalze sein. In letzterem Fall wird eine Rakel benötigt, um zu verhindern, dass auf der Dosierwalze 25 das Lacksystem 20 im Kreis gefahren wird.

Unterhalb der Auftragswalze 24 ist eine gummierte Gegendruckwalze 26 vorgesehen, über welche der Walzenspalt und damit der Abstand zwischen Auftragswalze 24 und Korkschicht eingestellt werden kann. In Transportrichtung TR schließt sich ein weiteres Walzenpaar an, von dem die untere Walze wiederum eine Gegendruckwalze 27 zur Einstellung des Walzenspalts und damit des Abstands der oberen Glättwalze 28 von der zugehörigen Korkschicht darstellt. Die Glättwalze 28 ist verchromt und äußerst eben und glatt. Ferner wird die Glättwalze 28 entgegen der Transportrichtung TR gedreht, so dass die Glättwalze 28 einen Teil des aufgebrachten Lacksystems 20 in Form einer Wulst zurückhält. Überschüssige Anteile des Lacksystems 20 werden dabei von der Glättwalze 28 an die Auftragswalze 24 und/oder direkt von dieser wieder in den Zwischenraum zwischen der Dosierwalze 25 und der Auftragswalze 24 zurückgeführt. Die Glättwalze 28 füllt damit zuverlässig die Vertiefungen in der Korkoberfläche mit dem Lacksystem 20 aus und lässt den Film des Lacksystems 20 mit einer exakt vorgegebenen Filmdicke durch.

## Patentansprüche

1. Verfahren zur Herstellung eines Fußbodenpaneels (1) mit einer Trägerplatte (2), einer Korkschicht (3), einer Grundierung (5) und einer Dekorschicht (6),
- bei dem die Korkschicht (3) auf die Trägerplatte (2) aufgebracht wird (10),
- bei dem zur Bildung der Grundierung (5) ein fluides Lacksystem (20) mit einem Anteil flüchtiger Komponente von maximal 10 Vol.-% auf die Korkschicht (3) aufgebracht wird (11) und
- bei dem die Dekorschicht (6) auf die Grundierung (5) aufgedruckt und/oder aufgewalzt wird (13).

2. Verfahren nach Anspruch 1,
bei dem zur Bildung der Grundierung (5) ein Lacksystem (20) mit einem Anteil flüchtiger Komponente von maximal 5 Vol.-%, insbesondere von maximal 3 Vol.-%, auf die Korkschicht (3) aufgebracht wird (11).

3. Verfahren nach Anspruch 1 oder 2,
bei dem zur Bildung der Grundierung (5) ein strahlenhärtendes, vorzugsweise UV-härtendes, Lacksystem (20) auf die Korkschicht (3) aufgebracht wird.

4. Verfahren nach einem der Ansprüche 1 bis 3,
bei dem zur Bildung der Grundierung (5) ein Acrylharz-Lacksystem (20), vorzugsweise mit wenigstens einem Polyacrylat und/oder wenigstens einem Polymethacrylat, auf die Korkschicht (3) aufgebracht wird.

5. Verfahren nach einem der Ansprüche 1 bis 4,
bei dem die Korkschicht (3) vor dem Aufbringen des Lacksystems (20) zur Bildung der Grundierung (5) auf eine Temperatur zwischen 40°C und 60°C, vorzugsweise von etwa 50°C, erwärmt wird.

6. Verfahren nach einem der Ansprüche 1 bis 5,
bei dem das Lacksystem (20) zur Bildung der Grundierung (5) mit einer Walzenauftragsmaschine (21), vorzugsweise unfassend eine Auftragswalze (24), aufgetragen wird.

7. Verfahren nach einem der Ansprüche 1 bis 6,
bei dem die Oberfläche des Lacksystems (20) zur Bildung der Grundierung (5) nach dem Auftragen mittels einer Glättwalze (28) geglättet wird.

8. Verfahren nach einem der Ansprüche 1 bis 7,
bei dem die Grundierung (5) nach dem Aufbringen auf die Korkschicht (3) zum Glätten und/oder Verbessern der Haftung geschliffen (12) wird.

9. Verfahren nach einem der Ansprüche 1 bis 8,
bei dem auf die Grundierung (5) eine Grundfarbe, vorzugsweise mittels einer Walze, aufgebracht wird.

10. Verfahren nach einem der Ansprüche 1 bis 9,
bei dem die Dekorschicht (6) auf die Grundierung (5) oder auf die Grundfarbe, vorzugsweise im Tiefdruck, aufgedruckt wird.

11. Verfahren nach einem der Ansprüche 1 bis 10,
bei dem eine Haftvermittlerschicht (7) auf die Dekorschicht (6) aufgebracht wird.

12. Verfahren nach einem der Ansprüche 1 bis 11,
bei dem auf die Haftvermittlerschicht (7) oder die Dekorschicht (6) eine Versiegelungsschicht (8) aufgebracht wird.

13. Verfahren nach einem der Ansprüche 1 bis 12,
bei dem eine Korkschicht (3) mit einer Dichte von wenigstens 550 kg/m³, vorzugsweise von wenigstens 650 kg/m³, auf die Trägerplatte (2) aufgebracht wird.

14. Verfahren nach einem der Ansprüche 1 bis 13,
bei dem eine Korkschicht (3) mit einer Dicke von weniger als 2 mm, vorzugsweise von weniger als 1,5 mm, auf die Trägerplatte (2) aufgebracht wird.

15. Fußbodenpaneel mit einer Trägerplatte.(2), einer Korkschicht (3), einer Grundierung (5) und einer Dekorschicht (6), **dadurch gekennzeichnet, dass** das Fußbodenpaneel (1) nach einem der Ansprüche 1 bis 14 hergestellt ist.

## Claims

1. Method for producing a floor panel (1) with a carrier board (2), a cork layer (3), a primer (5) and a decorative layer (6),
- wherein the cork layer (3) is applied (10) to the carrier board (2),
- wherein, to form the primer (5), a fluid coating system (20) with a volatile component fraction of a maximum of 10% by volume is applied (11) to the cork layer (3) and
- wherein the decorative layer (6) is printed on the primer (5) and/or rolled on (13).

2. Method according to claim 1, wherein, to form the primer (5), a coating system (20) with a volatile component fraction of a maximum of 5% by volume, in particular a maximum of 3% by volume, is applied (11) to the cork layer (3).

3. Method according to claim 1 or 2, wherein, to form the primer (5), a radiation-curing, preferably UV-curing, coating system (20) is applied to the cork layer (3).

4. Method according to any one of claims 1 to 3, wherein, to form the primer (5), an acrylic resin coating system (20), preferably with at least one polyacrylate and/or at least one polymethacrylate, is applied to the cork layer (3).

5. Method according to any one of claims 1 to 4, wherein the cork layer (3) is heated to a temperature between 40°C and 60°C, preferably of about 50°C, before the application of the coating system (20) to form the primer (5).

6. Method according to any one of claims 1 to 5, wherein the coating system (20), to form the primer (5), is applied with a roller application machine (21), preferably comprising an application roller (24).

7. Method according to any one of claims 1 to 6, wherein the surface of the coating system (20), to form the primer (5), is smoothed by means of a smoothing roller (28) after application.

8. Method according to any one of claims 1 to 7, wherein the primer (5) is sanded (12) after application to the cork layer (3) to smooth and/or improve the adhesion.

9. Method according to any one of claims 1 to 8, wherein a base colour is applied to the primer (5), preferably by means of a roller.

10. Method according to any one of claims 1 to 9, wherein the decorative layer (6) is printed on the primer (5) or on the base colour, preferably by gravure printing.

11. Method according to any one of claims 1 to 10, wherein an adhesion promoter layer (7) is applied to the decorative layer (6).

12. Method according to any one of claims 1 to 11, wherein a sealing layer (8) is applied to the adhesion promoter layer (7) or the decorative layer (6).

13. Method according to any one of claims 1 to 12, wherein a cork layer (3) with a density of at least 550 kg/m³, preferably of at least 650 kg/m³, is applied to the carrier board (2).

14. Method according to any one of claims 1 to 13, wherein a cork layer (3) with a thickness of less than 2 mm, preferably less than 1.5 mm, is applied to the carrier board (2).

15. Floor panel with a carrier board (2), a cork layer (3), a primer (5) and a decorative layer (6), **characterised in that** the floor panel (1) is produced according to any one of claims 1 to 14.

## Revendications

1. Procédé de fabrication de panneaux de plancher (1) avec une plaque de support (2), une couche de liège (3), une couche de fond (5) et une couche de décoration (6),
- dans lequel, pour la formation de la couche de fond (5), on applique sur la plaque de support (2), un système de laque fluide (20) dont le pourcentage volumétrique de composants volatils est de 10 % au maximum (11), et
- dans lequel la couche de décoration (6) est imprimée et / ou appliquée au rouleau (13) sur la couche de fond (5) (13).

2. Procédé selon la revendication 1, dans lequel, pour la formation de la couche de fond (5), un système de laque fluide (20) avec un pourcentage volumétrique de composants volatils de 5 % au maximum est appliqué sur la couche de liège (3).

3. Procédé selon revendication 1 ou 2, dans lequel, pour la formation de la couche de fond (5), un système de laque (20) radiodurcissable, de préférence UV-durcissable, est appliqué sur la couche de liège (3).

4. Procédé selon l'une des revendications 1 à 3, dans lequel, pour la formation de la couche de fond (5), un système de laque de résine acrylique (20), qui, de préférence, comprend au moins un polyacrylate et / ou au moins un poly méthacrylate, est appliqué sur la couche de liège (3).

5. Procédé selon l'une des revendications 1 à 4, dans lequel, avant l'application du système de laque (20), pour la formation de la couche de fond (5), la couche de liège (3) est chauffée à une température située entre 40 °C et 60 °C, de préférence à une température d'environ 50 °C.

6. Procédé selon l'une des revendications 1 à 5, dans lequel le système de laque (20), pour la formation de la couche de fond (5), est appliqué avec une machine d'enduction au rouleau (21) qui, de préférence, est dotée d'un rouleau applicateur (24).

7. Procédé selon l'une des revendications 1 à 6, dans lequel la surface du système de laque (20) pour la formation de la couche de fond (5) est lissée après l'application au moyen d'un cylindre à polir (28).

8. Procédé selon l'une des revendications 1 à 7, dans lequel, après l'application sur la couche de liège (3), on rectifie la couche de fond (5) pour la lisser et / ou pour améliorer son adhérence (12).

9. Procédé selon l'une des revendications 1 à 8, dans lequel une couleur de fond est appliquée sur la couche de fond (5) au moyen d'un rouleau.

10. Procédé selon l'une des revendications 1 à 9, dans lequel la couche de décoration (6) est imprimée sur la couche de fond (5) ou sur la couleur de fond, de préférence en creux.

11. Procédé selon l'une des revendications 1 à 10, dans lequel une couche d'agent adhésif (7) est appliquée sur la couche de décoration (6).

12. Procédé selon l'une des revendications 1 à 11, dans lequel une couche de scellement (8) est appliquée sur la couche d'agent adhésif (7) ou sur la couche de décoration (6).

13. Procédé selon l'une des revendications 1 à 12, dans lequel une couche de liège (3) d'une densité d'au moins 550 kg / m³, de préférence d'au moins 650 kg / m³, est appliquée sur la plaque de support (2).

14. Procédé selon l'une des revendications 1 à 13, dans lequel une couche de liège (3) d'une épaisseur inférieure à 2 mm, de préférence inférieure à 1,5 mm, est appliquée sur la plaque de support (2).

15. Panneau de plancher qui est doté d'une plaque de support (2), d'une couche de liège (3), d'une couche de fond (5) et d'une couche de décoration (6), **caractérisé en ce que** ledit panneau de plancher (1) est fabriqué selon l'une des revendications 1 à 14.
